Europäisches Patentamt

European Patent Office

Office européen des brevets

(11) Publication number: **0 653 746 A2**

## EUROPEAN PATENT APPLICATION

(21) Application number: **94118034.1**

(22) Date of filing: **15.11.94**

(30) Priority: **16.11.93 KR 9324376**

(43) Date of publication of application:
**17.05.95 Bulletin 95/20**

(84) Designated Contracting States:
**DE FR GB NL**

(51) Int. Cl.⁶: **G11B 5/008**, G11B 15/44,
G11B 5/53, G11B 5/86

(71) Applicant: **DAEWOO ELECTRONICS CO., LTD**
**541, 5-Ga, Namdaemoon-Ro**
**Jung-Gu,**
**Seoul 100-095 (KR)**

(72) Inventor: **Lee, Jin-Koo**
**97-15, Cheongpa-Dong,**
**Yongsan-Ku**
**Seoul (KR)**

(74) Representative: **von Samson-Himmelstjerna,**
**Friedrich R., Dipl.-Phys. et al**
**SAMSON & PARTNER**
**Widenmayerstrasse 5**
**D-80538 München (DE)**

(54) **Multi-track helical scanning system.**

㊞ A magnetic reproducing and recording system for duplicating video information employs a helical scanning apparatus which is adapted for helically scanning a multiple number of tracks on a magnetic tape and which comprises a tape transport means for moving the magnetic tape at a speed as N times high as a standard tape movement speed and a rotatable head drum assembly for scanning the magnetic tape, the head drum assembly having 2N number of video heads arranged in N number of pairs mounted thereon with a diametrically opposite relationship in such a manner that each of the video heads is angularly separated from one another by 360°/2N and having azimuth angles different from each other in an alternate fashion.

*FIG.1*

EP 0 653 746 A2

Field of the Invention

The present invention relates to a helical scanning apparatus for use in a magnetic recording and reproducing system; and, more particularly, to a multi-track scanning apparatus of a magnetic tape loaded in the magnetic recording and reproducing system.

Description of the Prior Art

In a magnetic recording and reproducing system such as a video cassette recorder("VCR"), a helical scanning apparatus is normally employed to scan a magnetic tape through the use of a cylindrical rotatable drum assembly called "scanner" having a pair of video heads installed in a diametrically opposite relationship thereon for recording and/or reproducing a video signal.

Each video head is in contact with the tape for each revolution of the drum assembly to record or reproduce the video signal on a per field basis.

In such a helical scanning apparatus, it is sometimes necessary to reproduce or record video signals at a high speed for the purpose of fast duplication. One of the important variables that control the duplication speed is the tape movement speed. The faster the tape movement speed is, the higher the duplication speed becomes. However, as the tape movement speed increases, the trajectory of the video heads tends to be misaligned with respect to their corresponding tracks on the tape due to the change in the relative speed between the tape and the video heads in contact with the tape. Therefore, there may occur cross talks caused by one of the video heads scanning a portion of its adjacent track. The cross talks in turn may produce a noise band in a reproduced picture.

Another important variable is the number of the heads mounted on the drum assembly. Certain VCR models include an extra pair of video heads. For example, one of the multi-head VCR system disclosed in U.S.Patent No. 5,311,375 issued to Yoshiyuki Ikushima et al. includes a head arrangement on a drum assembly having a first and a second pairs of heads. The first pair of heads scans to form a first and a second tracks spaced apart by approximately one track width, and the second pair scans to form a third and a fourth tracks spaced apart by approximately one track width and in an interlaced manner with the first and the second tracks. Such head arrangement may be useful in improving the quality of a reproduced picture in a special reproducing mode such as a still, fast forward, or cue mode; but is not adequate for use in the fast reproduction of prerecorded video signal.

U.S. Patent No. 5,184,254 issued to Kaneko et. al shows a head arrangement comprising two pairs of heads which are arranged at positions opposite each other with an angular distance of 180° therebetween on a rotary drum, which is also intended for use to carry out a special reproducing mode, but not for the fast reproduction purpose.

Accordingly, there exists a need to develop a technology capable of equipping a VCR with the ability to duplicate prerecorded video signals in a high speed without creating a noise band.

Summary of the Invention

It is, therefore, an object of the invention to provide a helical scanning apparatus capable of scanning a multiple number of video tracks to thereby achieve a high speed duplication.

It is another object of the invention to provide a magnetic recording and reproducing system adapted to duplicate video information through the use of the multiple track helical scanning apparatus.

In accordance with a preferred embodiment of the present invention, there is provided a helical scanning apparatus for use in a magnetic recording and reproducing system adapted for helically scanning a multiple number of tracks on a magnetic tape, which comprises: a tape transport means for moving the magnetic tape at a speed as N times high as a standard tape movement speed, wherein said N is a speed multiplying factor and positive integer; and a rotatable head drum assembly for scanning the magnetic tape guided at an angle to the drum assembly, the head drum assembly having 2N number of video heads arranged in N number of pairs with a diametrically opposite relationship along the circumferential outer surface thereof in such a manner that each of the video heads is angularly separated from one another by 360°/2N and having azimuth angles different from each other in an alternate fashion.

Brief Description of the Drawings

The above and other objects and features of the present invention will become apparent from the following description of preferred embodiments taken in conjunction with the accompanying drawings, in

2

which:

FIG. 1 shows a conventional helical scanning apparatus;

FIG. 2 presents a top plan view of the head arrangement on the head drum assembly shown in FIG. 1 in accordance with the invention;

FIG. 3 represents a diagrammatic view of a track pattern on the magnetic tape traced by the head arrangement;

FIG. 4 provides a schematic block diagram of a magnetic recording and reproducing system employing the inventive helical scanning apparatus; and

FIG. 5 is a timing diagram of the switch control signals generated from the switching signal generator shown in FIG. 4.

Detailed Description of the Preferred Embodiments

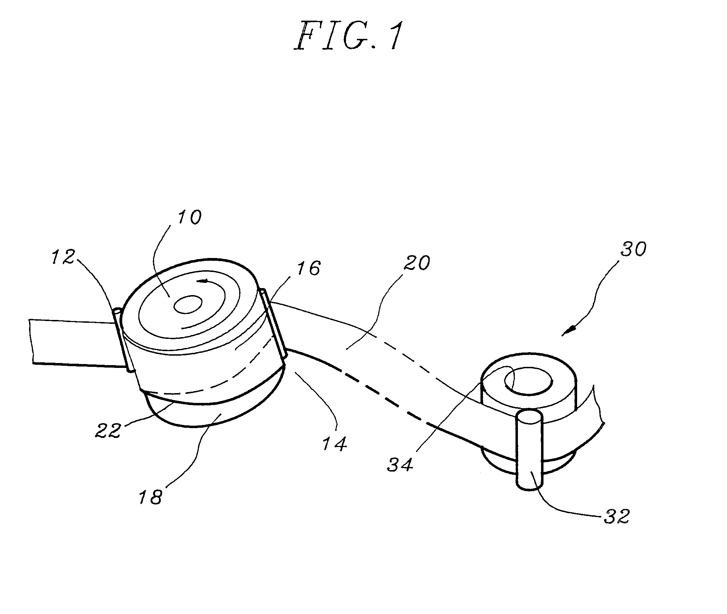

Referring to FIG 1, there is shown a basic arrangement for a conventional helical scanning apparatus to help explain the invention, wherein a magnetic tape 20 is helically wound around a cylindrical head drum assembly 10.

To facilitate the tape 20 to enter and exit from the head drum assembly 10, there are provided a supply slant post 12 at the left side used as an entrance guide for the head drum assembly 10 and a take-up slant post 14 at the right side used as an exit guide for the head drum assembly 10. The supply slant post 12 makes the tape 20 travel downward and the take-up slant post 14 sets the tape toward the tape transporting mechanism 30 including a pinch roller 32 and a capstan 34.

The head drum assembly 10 is divided into an upper drum part 16 and a lower drum part 18. The upper drum part 16 rotates counterclockwise and carries two video heads mounted on the lower surface thereof. The video heads are precisely 180° apart, opposite each other on the same diameter of the drum assembly 10. They protrude slightly to press into the surface of the tape 20. The lower part 18 of the drum assembly 10 is stationary and has a guide band 22 machined into the surface thereof. The guide band 22 serves to guide the tape 20 at an angle "$\theta_T$" of, e.g., 5.93539°, to the drum assembly 10. The angle is called a "lead angle".

The video heads alternate in recording a sequence of video fields. Since a one-half turn takes approximately 1/60 second for one field, a full turn takes 1/30 second in the NTSC standard. The rotation speed, then, is 30 revolutions per second (rps), or 1800 revolutions per minute (rpm) for the head drum assembly 10.

Since the tape 20 is angled downward as it travels around the drum assembly 10, each video head crosses the width of the tape at a shallow angle. Each path starts near the lower edge of the tape and finishes near the upper edge thereof.

The tape 20 is in contact with the head drum assembly 10 covering an angle of a little more than 180° and the tape 20 moves along the guide band 22 at a standard speed, e. g., 33.35 mm/sec, in a playback mode or recording mode, through the use of the tape transport mechanism 30 including the pinch roller 32 and the capstan 34. Magnetic recording and/or reproducing is made on diagonal paths or tracks across the tape as the tape travels across the heads at the lead angle. As is well known in the art, the track is inclined at an angle of, e.g., 5.9694° with respect to a longitudinal direction of the magnetic tape. On each diagonal track, there is a single vertical field containing 262.5 horizontal lines ("262.5H") of video information, in case of the NTSC standard.

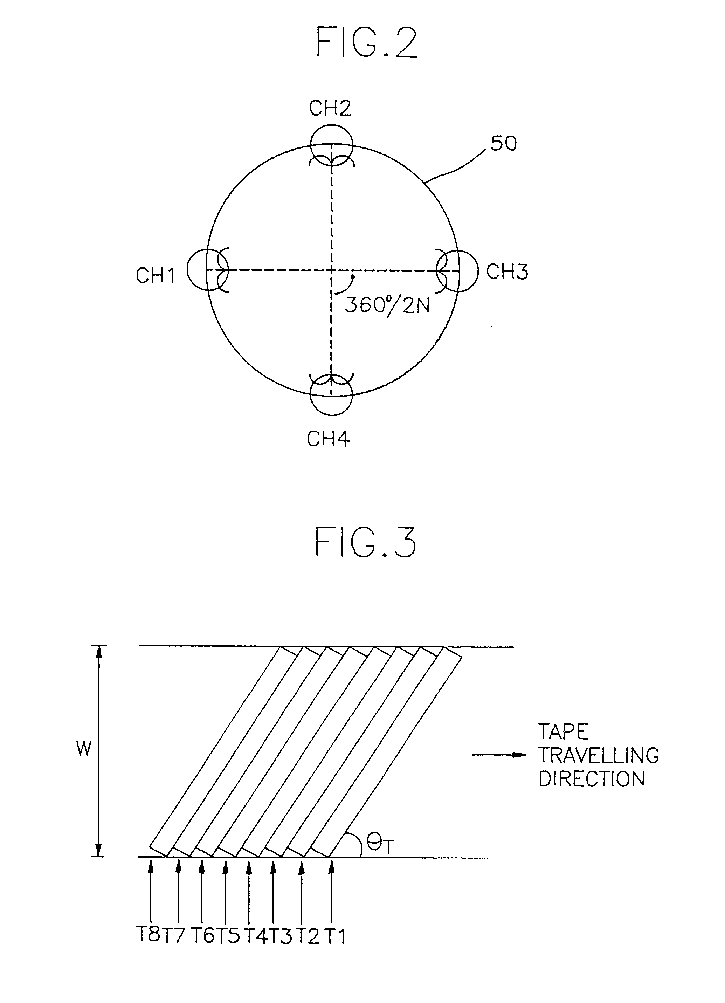

In accordance with the invention, the tape transport mechanism 30 is designed to move the magnetic tape 20 at a faster speed than the standard speed. That is, the tape transport mechanism 30 advances the magnetic tape at a speed as N times high as the standard speed on reproducing a prerecorded video signal or recording the reproduced video signal for the purpose of high speed duplication wherein N is a speed multiplying factor and positive integer (N = 1, 2, 3,...). The head drum assembly adapted to scan the magnetic tape 20 running at N times the standard speed will be described with reference to FIGs. 2 and 3 as follows.

FIG 2 shows a plan view of the head drum assembly in accordance with the invention, which is capable of performing a multi-track scanning on the tape 20.

The drum assembly 50 includes a head arrangement having 2N number of video heads mounted thereon. The 2N video heads are arranged in N number of pairs with a diametrically opposite relationship and are angularly separated one another by 360°/2N. The number N corresponds to the speed multiplying factor of the tape transport mechanism 30. In FIG. 2, for the sake of simplicity, the number N is chosen to be "2"; and, therefore, only four video heads CH1, CH2, CH3 and CH4 are shown therein. As shown, the video heads CH1, CH2, CH3 and CH4 are angularly separated one another by 360°/2N, i.e. 90°, and the video head pairs CH1, CH3 and CH2, CH4 are arranged in pairs with a diametrically opposite relationship, respectively.

Further, the video heads CH1, CH2, CH3 and CH4 have one of two azimuth angles different from each other in an alternate fashion wherein a first azimuth angle is inclined in a first direction perpendicular to the head scanning direction and a second azimuth angle is inclined in a second direction opposite the first direction.

FIG. 3 illustrates the relationship between the video heads on the drum assembly 10 and the tape 20. As the tape 20 moves across the head drum assembly 50 at N times the standard speed, each video head sequentially lays down its corresponding track to scan the track for each $360°/2N$, i.e. $90°$, rotation of the head drum assembly 50. Therefore, one track is traced by each of the video heads, to thereby scan four field video information marked T1 to T4 during the period of each pass of the head drum assembly 50. Accordingly, it achieves the multi-track scanning of the magnetic tape 20 at a time during the duration of each pass of the head drum assembly 50.

As the tape movement speed increases, the trajectory of the video heads tends to have a slope which will be greater than the track angle $\theta_T$ on the magnetic tape 20. Therefore, in order to allow each of the video heads to exactly trace its corresponding track on the magnetic tape 20, a lead angle "$\theta_D$"of the head drum assembly 50 should be changed as follows:

$$\theta_D = \tan^{-1}\left(\cfrac{W}{\cfrac{W}{\tan\theta_T} + NL}\right) \qquad Eq.1$$

wherein $\theta_T$ is the track angle inclined with respect to a longitudinal direction of the magnetic tape, W is the effective tape width, N is the speed multiplying factor and L is the distance of the tape movement per track.

Further, the diameter "D" of the head drum assembly 50 is also changed. The drum diameter can be derived as:

$$\sin\theta_D = \left(\cfrac{W}{\cfrac{\pi D}{2}}\right) \qquad Eq.2$$

Accordingly,

$$D = \left(\cfrac{W}{\cfrac{\pi\sin\theta_D}{2}}\right) \qquad Eq.3$$

wherein D is the diameter of the drum assembly, N is the speed multiplying factor and $\theta_D$ is the lead angle of the drum assembly 50.

In this connection, it should be noted that the slant angle and the center coordinate for the slant posts 12 and 14 are also deformed to match with the configuration of the head drum assembly. There are well known methods in the art to derive the slant angle and the center coordinate. One of the methods, for instance, is disclosed in an article by Nakamura Katsushi, "Design Method for a Tape Scanning System", Design and Estimation of a VTR Tape Scanning System, pp 11-14, published by Matsushita Electronics Co., Ltd. in Japan (April 30, 1990), which is incorporated herein by reference.

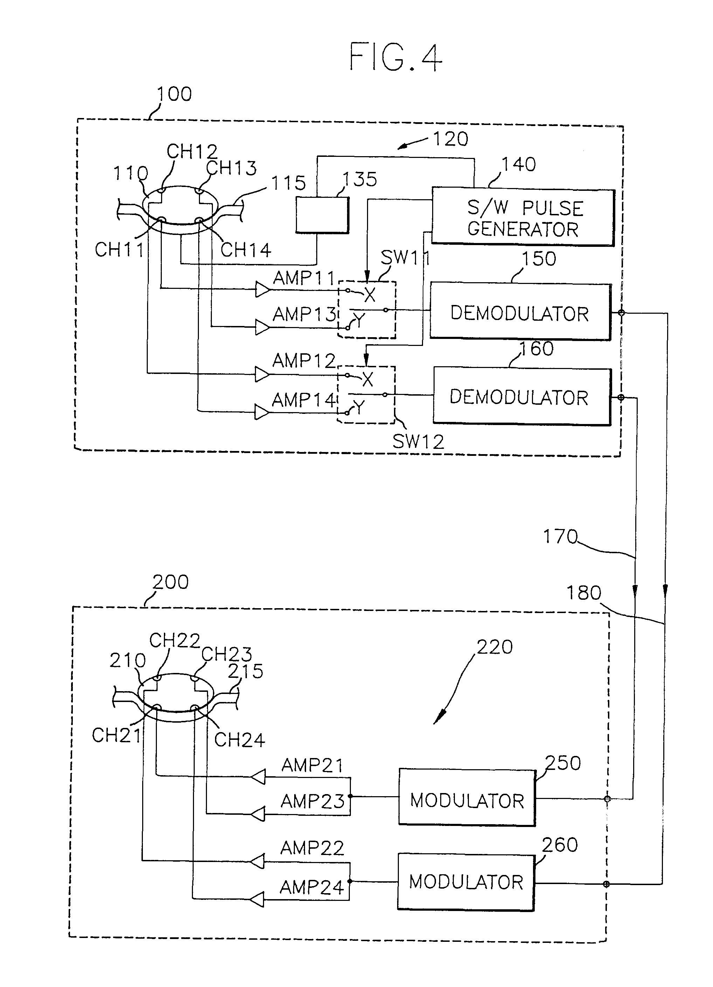

Referring now to FIG. 4, there is shown a magnetic recording and reproducing system employing the helical scanning apparatus as set forth above in order to duplicate video information at a high speed. The magnetic recording and reproducing system comprises a reproducing apparatus 100 for reproducing a prerecorded video signal on a first magnetic tape 115 loaded therein and a recording apparatus 200 for recording the reproduced video signal from the reproducing apparatus 100 on a second magnetic tape 215 loaded therein.

4

The reproducing apparatus 100 includes a first rotatable head drum assembly 110 for reproducing only, and a reproducing circuit 120; and the recording apparatus 200 includes a second rotatable head drum assembly 210 for recording only, and a reproducing circuit 220. The first and the second rotatable head drum assemblies 110 and 210 are of the same configuration as the head drum assembly 50 described in FIG. 2.

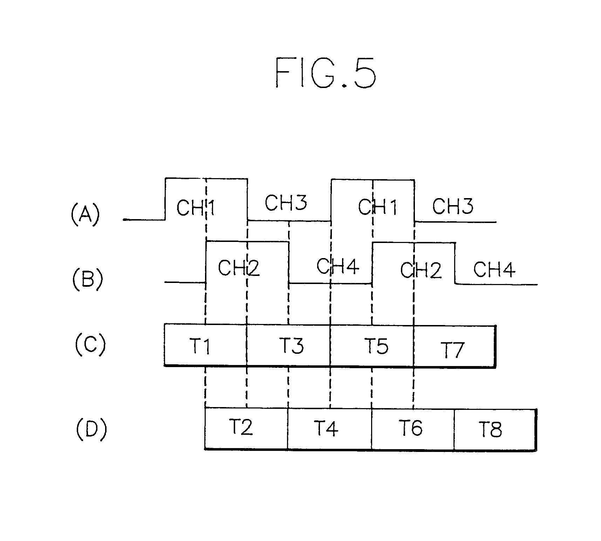

The reproducing circuit 120 is equipped with a drum speed detector 135 for generating a pulse signal at each rotation of the drum assembly 110 and a switching pulse generator 140 for controlling the switching operation of a pair of change-over switches SW11 and SW12. The switching pulse generator 140, in response to the pulse signal from the drum speed detector 135, generates a first and a second square wave signals, as shown in FIGs. 5A and 5B, respectively, which have a period of 30 Hz and a phase-shifted relationship by an angle of 360°/2N ( 90° in case of N = 2) with each other. The first square wave signal is provided as a first switching control signal to a first change-over switch SW11 for delivering video signals T1, T3, T5, T7, as shown in FIG. 5C, reproduced by a pair of video heads CH11 and CH13 and the second square wave signal is provided as a second switching control signal to the second change-over switch SW12 for delivering video signals T2, T4, T6, T8, as shown in FIG. 5D, reproduced by another pair of video heads CH12 and CH14. The first change-over switch SW11 selectively passes the reproduced video signals T1, T5 and T3, T7 to a first demodulator 150 by changing its movable contacts between its fixed contacts X and Y in accordance with high and low logic levels of the first control signal, respectively. Similarly, the second change-over switch SW12 selectively passes the reproduced video signals T2, T6 and T4, T8 to a second demodulator 160 by changing its movable contact between its fixed contacts X and Y in accordance with high and low logic levels of the second control signal, respectively. The reproduced video signals T1, T5 and T3, T7 and the reproduced video signals T2, T6 and T4, T8 are subjected to a frequency demodulation process by the demodulators 150 and 160 and in turn provided to the recording apparatus 200 through lines 170 and 180, respectively.

The demodulated video signals on lines 170 and 180 are supplied to a first and a second modulators 250 and 260 in the recording apparatus 200, respectively. Each of the first and the second modulators 250 and 260 performs a frequency modulation to produce a modulated video signal adapted for recording. The modulated video signals from the first and the second modulators 250 and 260 are applied to a pair of video heads CH21 and CH23 and another pair of video heads CH22 and CH24 on the second head drum assembly 210 through a pair of recording amplifiers AMP21 and AMP23 and another pair of recording amplifiers AMP22 and AMP24, respectively. Accordingly, a sequence of the reproduced video signals T1 to T8 from the first magnetic tape 115 by the reproducing video heads CH11 to CH14 in the reproducing apparatus 100 can be recorded on the second magnetic tape 215 by the recording video heads CH21 to CH24 in the recording apparatus 200.

In connection with the reproducing and recording of the video signal, it should be noted that an audio signal may be linearly reproduced or recorded as it is because the frequency of the audio signal becomes linearly increased in proportion to the increased tape movement speed.

While the present invention has been shown and described with respect to the preferred embodiments, it will be apparent to those skilled in the art that many changes and modifications may be made without departing from the spirit and scope of the invention as defined in the appended claims.

**Claims**

1. A helical scanning apparatus for use in a magnetic reproducing and recording system adapted for helically scanning a multiple number of tracks on a magnetic tape, which comprises:

   a tape transport means for moving the magnetic tape at a speed as N times high as a standard tape movement speed, wherein said N is a speed multiplying factor and positive integer; and

   a rotatable head drum assembly for scanning the magnetic tape guided at an angle to the drum assembly, the head drum assembly having 2N number of video heads arranged in N number of pairs with a diametrically opposite relationship along the circumferential outer surface thereof in such a manner that each of the video heads is angularly separated from one another by 360°/2N and having azimuth angles different from each other in an alternate fashion.

2. The apparatus as recited in claim 1, wherein the angle ($\theta_D$) to the drum assembly is defined as:

$$\theta_D = \tan^{-1}\left(\cfrac{W}{\cfrac{W}{\tan\theta_T} + NL}\right)$$

wherein $\theta_T$ is the track angle inclined with respect to a longitudinal direction of the magnetic tape, W is the effective track width, N is the speed multiplying factor and L is the distance of the tape movement per track.

3. The apparatus as recited in claim 2, wherein the diameter (D) of the drum assembly is derived as:

$$D = \left(\cfrac{W}{\cfrac{\pi\sin\theta_D}{2}}\right)$$

4. A magnetic reproducing and recording system for duplicating video information having a reproducing apparatus for reproducing a video signal prerecorded on a first magnetic tape loaded therein and a recording apparatus for recording the reproduced video signal from the reproducing unit on a second magnetic tape loaded therein, wherein each of the reproducing and the recording apparatus comprises:

a tape transport means for moving the first or the second magnetic tape at a speed as N times high as a standard tape movement speed, wherein said N is a speed multiplying factor and a positive integer, respectively; and

a rotatable head drum assembly for scanning the first or the second magnetic tape guided at an angle to the head drum assembly, respectively, each of the drum assemblies having 2N number of video heads arranged in N number of pairs with a diametrically opposite relationship along the circumferential outer surface thereof in such a manner that each of the video heads is angularly separated from one another by 360°/2N and having azimuth angles different from each other in an alternate fashion.

5. The magnetic reproducing and recording system of claim 4, wherein the angle ($\theta_D$) to the drum assembly is defined as:

$$\theta_D = \tan^{-1}\left(\cfrac{W}{\cfrac{W}{\tan\theta_T} + NL}\right)$$

wherein $\theta_T$ is the angle of the track formed on the magnetic tape, W is the effective track width, N is the speed multiplying factor and L is the distance of the tape movement per track along the travelling direction thereof.

6. The magnetic reproducing and recording system of claim 5, wherein the diameter (D) of the drum assembly is derived as:

$$D = \left(\cfrac{W}{\cfrac{\pi\sin\theta_D}{2}}\right)$$

*FIG.1*

# FIG.2

# FIG.3

# FIG.4

# FIG.5

(A)

CH1    CH3    CH1    CH3

(B)

CH2    CH4    CH2    CH4

(C)

T1    T3    T5    T7

(D)

T2    T4    T6    T8